# EUROPÄISCHE PATENTSCHRIFT

(11) **EP 0 830 989 B1**
(45) Veröffentlichungstag und Bekanntmachung des Hinweises auf die Patenterteilung: **14.11.2001**
(21) Anmeldenummer: 97114262.5
(22) Anmeldetag: 19.08.1997
(51) Int. Cl.: B60R 21/09

(54) **Fusshebelanordnung für ein Kraftfahrzeug**
Pedal arrangement for a vehicle
Agencement d'une pédale de commande pour véhicule

(30) Priorität: 19.09.1996 DE 19638327
(43) Veröffentlichungstag der Anmeldung: 25.03.1998
(73) Patentinhaber: Volkswagen Aktiengesellschaft, 38436 Wolfsburg (DE)
(72) Erfinder: Witte, Bastian, Dr., 38179 Gross Schwülper (DE); Hoffman, Jürgen, 31234 Plockhorst (DE)

(56) Entgegenhaltungen:
- WO-A-97/06036
- DE-A- 1 944 785
- DE-A- 19 501 859
- DE-A- 19 515 852

## Beschreibung

Die Erfindung bezieht sich auf eine Fußhebelanordnung für ein Kraftfahrzeug gemäß dem Oberbegriff von Anspruch 1.

Durch die Verwendung von Rückhaltesystemen in Kraftfahrzeugen, wie Sicherheitsgurten und Airbags, nehmen die Verletzungen bei Frontalunfällen an Kopf und Brust stetig ab. Dadurch treten Verletzungen an den unteren Extremitäten in den Vordergrund. Dementsprechend sind Vorschläge gemacht worden, die Verletzungen des Fahrers durch das Fußhebelwerk, insbesondere das Bremspedal, bei einem Frontalaufprall des Fahrzeugs zu verringern.

Die DE 195 01 859 A1 beschreibt eine Fußhebelanordnung gemäß dem Oberbegriff von Anspruch 1. Um die Vorwärtsbewegung des auf dem Bremspedal ruhenden Fahrerfußes im Falle eines Auffahrunfalls zu ermöglichen, wird die Pedaldruckstange, die das Bremspedal mit dem Kolben des Hauptbremszylinders verbindet, im Falle eines Auffahrunfalls ausgeknickt. Dazu ist ein mittlerer Bereich der Pedaldruckstange mit einer weiteren Druckstange verbunden, die zu dem Motorblock oder dem Getriebegehäuse führt und mit einem Freigang von diesem beabstandet ist. Durch die Verbiegung der Pedaldruckstange im Falle eines Auffahrunfalls wird das Bremspedal zur Spritzwand hingezogen und somit vom Fahrerfuß entfernt.

Nachteilhaft an einer derartigen Druckstange ist jedoch, daß eine relativ aufwendige und kostspielige Führung vom Motorblock bzw. Getriebegehäuse zu der Pedaldruckstange notwendig ist und das Gesamtgewicht der Fußhebelanordnung deutlich erhöht. Weiterhin ist eine aufwendige Führung der Druckstange durch den Motorraum notwendig, bei der Bauraumprobleme mit den Nebenaggregaten im Motorraum auftreten können.

Der Erfindung liegt die Aufgabe zugrunde, eine Fußhebelanordnung zu schaffen, die kostengünstig hergestellt werden kann und ein sicheres und rechtzeitiges Ausknicken bzw. Ausbiegen der Pedaldruckstange ermöglicht.

Diese Aufgabe wird durch eine Fußhebelanordnung nach Anspruch 1 gelöst. Die Unteransprüche beschreiben bevorzugte Weiterbildungen der erfindungsgemäßen Fußhebelanordnung.

Erfindungsgemäß ist somit vorgesehen, eine Rückwärtsbewegung des Motors oder Getriebes relativ zum Fahrzeugaufbau über eine Zugvorrichtung zum Ausknicken oder Verbiegen eines mittleren Bereichs der Pedaldruckstange zu nutzen. Dabei kann diese Rückwärtsbewegung direkt am Motor bzw. Getriebe oder an einem damit verbundenen Bauteil abgegriffen werden. Durch den Einsatz einer Zugvorrichtung entfällt somit die aufwendige und kostspielige Verwendung einer Druckstange. Weiterhin kann die Zugvorrichtung motorseitig effektiver angeordnet werden, so daß eine Rückwärtsbewegung des Motors ausgenutzt werden kann, ohne daß der Motor sich genau auf die Pedaldruckstange zubewegen muß.

Die Zugvorrichtung kann auf besonders vorteilhafte Weise nach den Ansprüchen 2 und 3 mit einem Motorlager bzw. der Momentenstütze des Motorlagers verbunden werden. Eine Momentenstütze wird bei Kraftfahrzeugmotoren verwendet, die mit einer Pendellagerung im Motorraum angebracht sind. Bei einer Pendellagerung werden die Trag-, Längs- und Seitenkräfte von zwei großen Motorlagern aufgenommen, die auf einer Hauptdrehachse des Motors liegen, wodurch gute akustische Eigenschaften erreicht werden können. Damit der Motor, der über das Getriebe auf die Abtriebsseite ein Drehmoment überträgt, sich nicht frei um die Achse der Pendellagerung verdreht, wird der Motor oder insbesondere das mit dem Motor starr verbundene Getriebe mit der von der Achse der Pendellagerung beabstandeten Momentenstütze am Fahrzeugaufbau oder Hilfsrahmen abgestützt.

Die Zugvorrichtung läßt sich auf vorteilhafte Weise nach Anspruch 4 als Bowdenzug ausbilden, da hiermit aufwendige Führungen des Zugseils über Rollen und dergleichen entfallen.

Die Erfindung wird im folgenden anhand der beiliegenden Zeichnungen an einigen Ausführungsformen näher erläutert. Es zeigen:
- Figur 1: die motorseitige Anbindung einer Zugvorrichtung einer Fußhebelanordnung gemäß einer ersten Ausführungsform der Erfindung in Seitenansicht;
- Figur 2: eine Draufsicht auf die Anordnung von Figur 1;
- Figur 3: eine Seitenansicht einer motorseitigen Anbindung der Zugvorrichtung gemäß einer zweiten Ausführungsform der Erfindung;
- Figur 4: die pedaldruckstangenseitige Ausbildung der Fußhebelanordnung gemäß einer Ausführungsform der Erfindung;
- Figur 5: eine weitere Ausführungsform der pedaldruckstangenseitigen Ausbildung;
- Figur 6: eine Schnittansicht entlang der Linie VI-VI in Figur 5.

Ein in den Figuren nicht gezeigter Motor und ein mit diesem starr verbundenes Getriebe 1 sind mit einer Pendellagerung im Hilfsrahmen 4 gelagert, wobei die Trag-, Längs- und Seitenkräfte von zwei großen Motorlagern aufgenommen werden, die auf einer Hauptdrehachse eines Motors liegen. Durch eine derartige Anordnung der Motorlager lassen sich gute akustische Eigenschaften erreichen. Damit der Motor sich durch die über das Getriebe auf die Abtriebsseite übertragenen Drehmomente nicht selbst auch um die Achse der Pendellagerung dreht, ist das Getriebe 1 mit einer Momentenstütze 2 in einem Lager 5 am Hilfsrahmen 4 abgestützt, wobei die Momentenstütze von der Achse der Pendellagerung beabstandet ist.

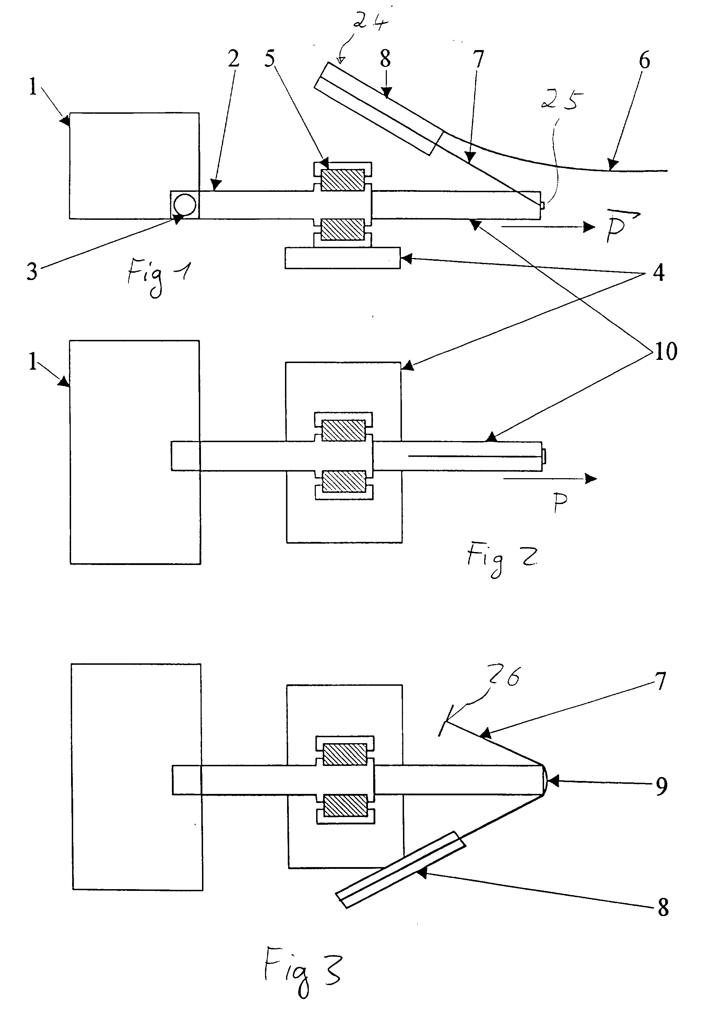

Erfindungsgemäß ist gemäß Figur 1 und 2 am hinteren Ende der Momentenstütze 2 ein Aufnahmeblech 10 montiert, an dessen hinterem Ende der Innenzug 7 eines Bowdenzugs 24 eingehängt ist, dessen Außenzug 8 am Fahrzeugaufbau 6 befestigt ist.

Bei einem Frontalunfall des Kraftfahrzeugs wird der Motor mit dem Getriebe 1 relativ früh von der Fahrzeugfront getroffen, so daß es sich anschließend in der zur Fahrtrichtung entgegengesetzten Richtung auf den Fahrer zubewegt. Es ergibt sich somit eine Rückwärtsbewegung des Motors und Getriebes 1 sowohl zum Hilfsrahmen als auch zum Fahrzeugaufbau, wobei die Relativbewegung zwischen dem Getriebe 1 und dem Fahrzeugaufbau 6 größer ist als die zwischen dem Getriebe 1 und dem Hilfsrahmen 4. Da die Momentenstütze 2 und das Anbringblech 10 sich relativ nahe am Fahrzeugaufbau befinden, kann am Zusatzblech 10 der Bowdenzug 24 derartig angebracht werden, daß der Außenzug 8 aufbauseitig und die Innenseele 7 mit dem Anbringblech 10 verbunden wird.

Bei einem Frontalunfall des Fahrzeugs wird somit der Motor und das mit ihm starr verbundene Getriebe 1 relativ zum Fahrer und zum Fahrzeugaufbau 6 in die im wesentlichen der Fahrtrichtung entgegengesetzten Richtung bewegt, die in Figur 1 und 2 mit P bezeichnet ist. Durch die Relativbewegung zwischen der Momentenstütze 2 und dem Fahrzeugaufbau 6 wird der Innenzug 7 des Bowdenzugs 24 relativ zum Außenzug 8 gezogen.

In Figur 1 ist bei der Bowdenzug 24 und der Innenzug 7 mit einem gewissen Winkel gegenüber der Pfeilrichtung P gezeigt, die Bewegung des Getriebes 1 und der Momentstütze 2 läßt sich jedoch am effektivsten Ausnutzen, wenn der Bowdenzug 24 und der Innenzug 7 zumindest im Bereich des Verbindungspunkts 25 im wesentlichen in Pfeilrichtung P verlaufen. Bei einer derartigen Anbringung läßt sich die Rückwärtsbewegung des Motors im Verhältnis 1:1 auf den Innenzug 7 übertragen.

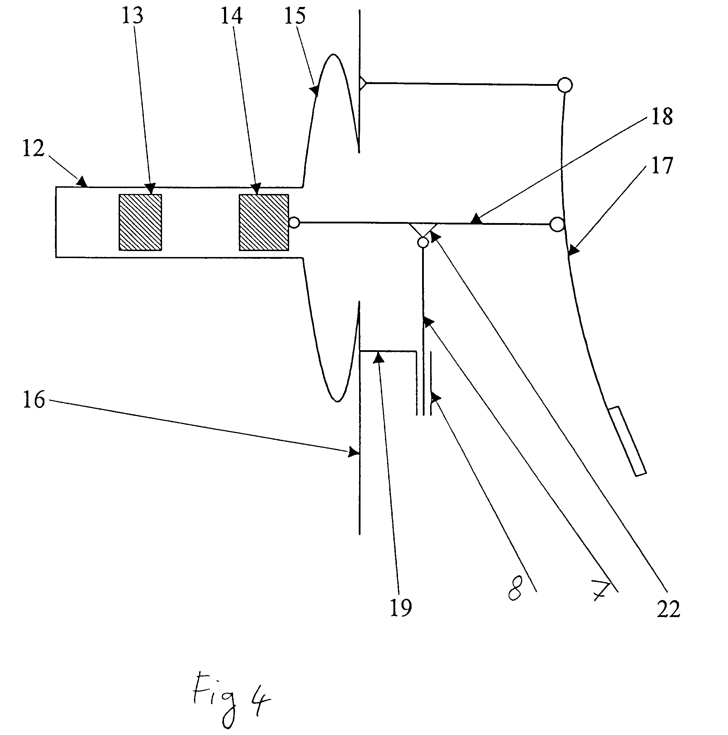

Werden größere Bowdenzugbewegungen benötigt, kann nach Figur 3 der Innenzug 7 in einem Verbindungspunkt 26 am Fahrzeugaufbau 6 oder gegebenenfalls am Hilfsrahmen 4 angebracht und an dem Anbringblech 10 bzw. direkt an der Momentenstütze 2 in einer Gleitführung 9 angelegt werden. Der Außenzug 8 des Bowdenzugs wird wie in der ersten Ausführungsform am Fahrzeugaufbau 6 befestigt. Durch eine derartige Anordnung können Übersetzungen von bis zu 1:2 erreicht werden. Durch weitere derartige flaschenzugartige Einrichtungen können auch höhere Übersetzungsverhältnisse erreicht werden.

Figur 4 zeigt eine Ausführungsform der Anbringung des pedaldruckseitigen Endes des Innenzugs 7. Über ein Bremspedal 17 können vom Fahrer über die Pedaldruckstange 18 die Bremskolben 13 und 14 im Bremszylinder 12 des Tandemhauptzylinders betätigt werden, wobei durch einen hier nur angedeuteten Bremskraftverstärker 15 eine Verstärkung der Bremskraft erreicht werden kann. Der Bremszylinder 12 und der Bremskraftverstärker 15 sind aufbauseitig in bekannter Weise an einer Spritzwand 16 angebracht.

Erfindungsgemäß ist der Innenzug 7 des Bowdenzugs in einem Verbindungspunkt 22 mit einem mittleren Bereich der Pedaldruckstange 18 derartig verbunden, daß bei einer Zugbewegung des Innenzugs 7 die Pedaldruckstange 18 im wesentlichen senkrecht zu ihrer Längsrichtung ausgebogen oder ausgeknickt wird. Der Außenzug 8 des Bowdenzugs ist über eine Befestigungseinrichtung 19 an der Spritzwand 16 montiert. Durch die Ausknickbewegung der Bremsdruckstange wird das Bremspedal nach vorne gezogen, so daß die Verletzungsgefahr für den Fahrer verringert ist. Die Verbindungseinrichtung 22 kann z. B. als einfache Haken-Ösen-Einrichtung ausgebildet werden, so daß der Innenzug 7 einfach eingehängt werden kann. Eine derartige einfache Anbringung bewirkt jedoch, daß bei jeder Betätigung der Bremsdruckstange der Innenzug 7 ebenfalls gezogen wird, was zu einer Dauerermüdung führen kann. Entsprechend kann die Verbindungseinrichtung 22 auch als Gleitführung ausgebildet werden, wobei die Bewegung der Pedaldruckstange 18 bei Bremsvorgängen jedoch durch Reibung behindert werden kann.

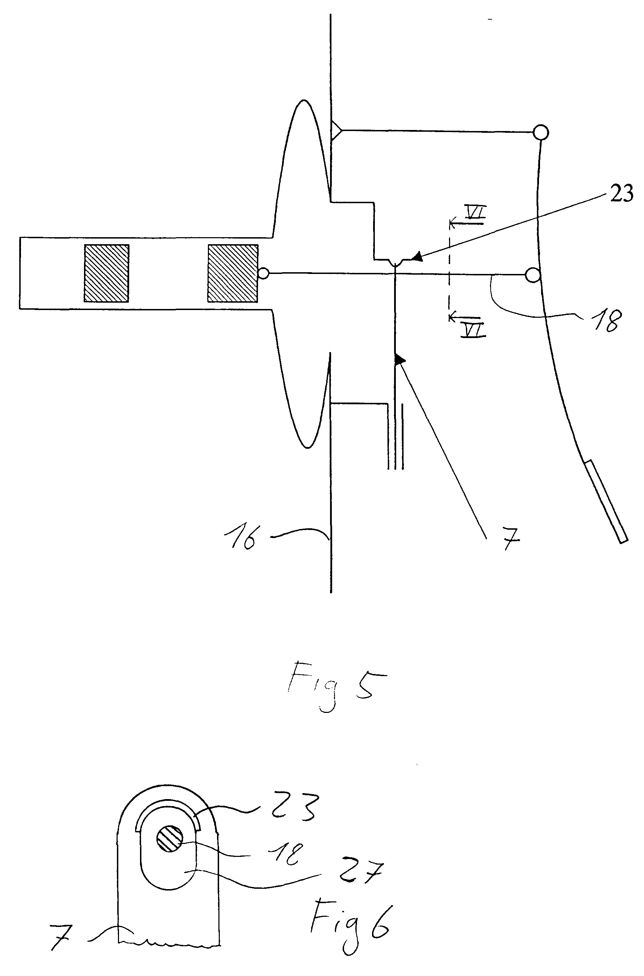

Die Figuren 5 und 6 zeigen eine weitere Anbringung des Innenzugs 7 im Bereich der Pedaldruckstange 18, die sowohl eine freie Betätigung der Pedaldruckstange 18 als auch ein sicheres Ausknicken bzw. Ausbiegen der Pedaldruckstange gewährleisten. Hierzu ist der Innenzug 21 des Bowdenzugs nicht direkt mit der Pedaldruckstange 18, sondern mit einem Halteelement 23 verbunden, das z. B. als kostengünstiges Tiefziehblech ausgeführt werden kann und an der Spritzwand 16 befestigt ist. Gemäß Figur 6 weist der Innenzug 21 eine Öse bzw. Aussparung 27 auf, die in das Halteelement 23 eingehängt ist, wobei die Pedaldruckstange 18 berührungsfrei durch die Aussparung 27 verläuft. Bei Betätigung des Innenzugs 21 wird das eine geringe Steifigkeit besitzende Halteelement 23 nach unten ausgebogen, bis der Innenzug 21 oder das umgebogene Halteelement 23 auf der Pedaldruckstange 18 aufliegt und sie bei weiterer Zugbewegung in bereits beschriebener Weise nach unten ausbiegt. Der Abstand zwischen dem Innenzug 21 und der Pedaldruckstange 18 kann dabei als Freigang eingestellt werden.

Weiterhin ist es möglich, den Innenzug zusätzlich am Bremspedal 17 zu befestigen und dieses im Falle eines Auffahrunfalls direkt nach vorne zu ziehen.

## Patentansprüche

1. Fußhebelanordnung für ein Kraftfahrzeug, mit
einem Pedal (17)
einer mit dem Pedal (17) verbundenen Pedaldruckstange (18) zur Übertragung von auf das Pedal (17) ausgeübten Druckbewegungen bzw. Druckkräften,
einer Ausknickvorrichtung, durch die die Pedaldruckstange (18) bei einer Rückwärtsbewegung des Motors oder Getriebes gegenüber dem Fahrzeugaufbau oder Hilfsrahmen in einem mittleren Bereich verbiegbar oder ausknickbar ist,
**dadurch gekennzeichnet, daß**
die Ausknickvorrichtung eine Zugkraft übertragende Zugvorrichtung (7, 8, 21) aufweist.

2. Fußhebelanordnung nach Anspruch 1, **dadurch gekennzeichnet, daß** die Zugvorrichtung (7, 8) mit einem Motorlager (2) verbunden ist.

3. Fußhebelanordnung nach Anspruch 2, **dadurch gekennzeichnet, daß** die Zugvorrichtung (7, 8, 21) mit einer Momentenstütze (2) einer Motor-Pendellagerung verbunden ist.

4. Fußhebelanordnung nach einem der Ansprüche 1 bis 3, **dadurch gekennzeichnet, daß** die Zugvorrichtung einen Bowdenzug (7, 8, 21) aufweist.

5. Fußhebelanordnung nach Anspruch 4, **dadurch gekennzeichnet, daß** der Außenzug (8) des Bowdenzugs am Fahrzeugaufbau (6) bzw. der Spritzwand (16) angebracht ist.

6. Fußhebelanordnung nach einem der Ansprüche 1 bis 5, **dadurch gekennzeichnet, daß** die Relativbewegung des Motors oder Getriebes gegenüber dem Fahrzeugaufbau durch die Zugvorrichtung übersetzt wird.

7. Fußhebelanordnung nach einem der Ansprüche 1 bis 6, **dadurch gekennzeichnet, daß** die Zugvorrichtung (7, 21), vorzugsweise ein Innenzug eines Bowdenzugs nach Anspruch 4, an einer Verbindungsstelle (26) mit dem Fahrzeugaufbau (6) verbunden ist und in einem mittleren Bereich zwischen der Verbindungsstelle (26) und einer Verbindungseinrichtung (22) mit der Pedaldruckstange (18) gleitend mit dem Motor, Getriebe oder einem mit dem Motor verbundenen Bauteil (2) verbunden ist.

8. Fußhebelanordnung nach einem der Ansprüche 1 bis 7, **dadurch gekennzeichnet, daß** die Zugvorrichtung (21) an ihrem pedaldruckstangenseitigen Ende mit dem Fahrzeugaufbau (6) bzw. der Spritzwand (16) verbunden ist und die Pedaldruckstange (18) zumindest teilweise derartig umgibt, daß sie bei einer Zugkraft oberhalb einer vorgegebenen Grenzkraft an der Pedaldruckstange (18) anliegt.

9. Fußhebelanordnung nach Anspruch 8, **dadurch gekennzeichnet, daß** die Zugvorrichtung (21) eine Aussparung (27) aufweist, die die Pedaldruckstange (18) vorzugsweise berührungsfrei umgibt.

10. Fußhebelanordnung nach Anspruch 8 oder 9, **dadurch gekennzeichnet, daß** die Zugvorrichtung mit einem umbiegbaren Halteelement (23), vorzugsweise einem Tiefziehblech, verbunden ist, das an der Spritzwand (16) befestigt ist.

11. Fußhebelanordnung nach einem der Ansprüche 1 bis 10, **dadurch gekennzeichnet, daß** das Pedal (17) ein Bremspedal und die Pedaldruckstange eine Bremspedaldruckstange (18) ist.

12. Fußhebelanordnung nach einem der Ansprüche 1 bis 11, **dadurch gekennzeichnet, daß** die Zugvorrichtung, vorzugsweise der Innenzug (7) nach Anspruch 4, zusätzlich an dem Pedal (17) befestigt ist derartig, daß das Pedal durch die Zugvorrichtung bei der Rückwärtsbewegung des Motors oder Getriebes gegenüber dem Fahrzeugaufbau oder Hilfsrahmen vom Fahrerfuß wegziehbar ist.

## Claims

1. Foot pedal arrangement for a motor vehicle, having
a pedal (17)
a pedal pressing rod (18) connected to the pedal (17) for transferring pressure movements or pressure forces exerted on the pedal (17),
a buckling device by means of which the pedal pressing rod (18) can be bent or buckled in a middle region during a rearward movement of the engine or transmission with respect to the vehicle body or subframe,
**characterised in that**
the buckling device comprises a tractive device (7, 8, 21) transferring a tractive force.

2. Foot pedal arrangement according to claim 1, **characterised in that** the tractive device (7, 8) is connected to an engine mounting (2).

3. Foot pedal arrangement according to claim 2, **characterised in that** the tractive device (7, 8, 21) is connected to a torque stay rod (2) of an engine pendulum bearing.

4. Foot pedal arrangement according to any one of claims 1 to 3, **characterised in that** the tractive device comprises a Bowden cable (7, 8, 21).

5. Foot pedal arrangement according to claim 4, **characterised in that** the external cable (8) of the Bowden cable is attached to the vehicle body (6) or the front wall (16).

6. Foot pedal arrangement according to any one of claims 1 to 5, **characterised in that** the relative movement of the engine or transmission with respect to the vehicle body is transmitted via the tractive device.

7. Foot pedal arrangement according to any one of claims 1 to 6, **characterised in that** the tractive device (7, 21), preferably an internal cable of a Bowden cable according to claim 4, is connected to the vehicle body (6) at a connection site (26) and in a middle region between the connection site (26) and a connection device (22) it is connected with the pedal pressing rod (18) in a sliding manner to the engine, transmission or a component (2) connected to the engine.

8. Foot pedal arrangement according to any one of claims 1 to 7, **characterised in that** the tractive device (21) is connected at its end on the pedal pressing rod side to the vehicle body (6) or the front wall (16) and at least partially surrounds the pedal pressing rod (18) in such a way that it lies against the pedal pressing rod (18) in the event of a tractive force above a preset limit force.

9. Foot pedal arrangement according to claim 8, **characterised in that** the tractive device (21) comprises an orifice (27) which surrounds the pedal pressing rod (18) preferably in a contact-free manner.

10. Foot pedal arrangement according to claim 8 or 9, **characterised in that** the tractive device is connected to a holding element (23) which can be bent over, preferably to a deep-drawn metal sheet which is attached to the front wall (16).

11. Foot pedal arrangement according to any one of claims 1 to 10, **characterised in that** the pedal (17) is a brake pedal and the pedal pressing rod is a brake pedal pressing rod (18).

12. Foot pedal arrangement according to one of claims 1 to 11, **characterised in that** the tractive device, preferably the internal cable (7) according to claim 4, is additionally attached to the pedal (17) in such a way that the pedal can be pulled away from the driver's foot by the tractive device in the event of the rearwards movement of the engine or transmission with respect to the vehicle body or subframe.

## Revendications

1. Dispositif à pédale destiné à un véhicule automobile, comportant
une pédale (17),
une tige de pression (18) de pédale, qui est reliée à la pédale (17) pour la transmission de mouvements de pression et de forces de pression exercés sur la pédale (17),
un dispositif d'inflexion, par lequel la tige de pression (18) de la pédale peut être déformée ou infléchie dans une zone centrale lors d'un mouvement de recul du moteur ou de la boîte de vitesses par rapport à la carrosserie du véhicule ou à un cadre auxiliaire,
**caractérisé en ce que**
le dispositif d'inflexion comporte un dispositif de traction (7, 8, 21) transmettant une force de traction.

2. Dispositif à pédale selon la revendication 1, **caractérisé en ce que** le dispositif de traction (7, 8) est relié à un support (2) de moteur.

3. Dispositif à pédale selon la revendication 2, **caractérisé en ce que** le dispositif de traction (7, 8, 21) est relié à une butée de couple (2) d'un palier pendulaire de moteur.

4. Dispositif à pédale selon l'une quelconque des revendications 1 à 3, **caractérisé en ce que** le dispositif de traction comporte un tirant Bowden (7, 8, 21).

5. Dispositif à pédale selon la revendication 4, **caractérisé en ce que** le tirant extérieur (8) du tirant Bowden est fixé sur la carrosserie (6) du véhicule ou sur le tablier avant (16).

6. Dispositif à pédale selon l'une quelconque des revendications 1 à 5, **caractérisé en ce que** le mouvement relatif du moteur ou de la boîte de vitesses par rapport à la carrosserie du véhicule est démultiplié par le dispositif de traction.

7. Dispositif à pédale selon l'une quelconque des revendications 1 à 6, **caractérisé en ce que** le dispositif de traction (7, 21), de préférence un tirant intérieur d'un tirant Bowden selon la revendication 4, est relié à la carrosserie (6) du véhicule au niveau d'un point de liaison (26), et **en ce que**, dans une zone centrale entre le point de liaison (26) et un dispositif de liaison (22) de la tige de pression (18) de la pédale, il est relié de façon coulissante au moteur, à la boîte de vitesses ou à un composant (2) relié au moteur.

8. Dispositif à pédale selon l'une quelconque des revendications 1 à 7, **caractérisé en ce que** le dispositif de traction (21) est relié à la carrosserie (6) du véhicule ou au tablier avant (16) par son extrémité située du côté de la tige de pression de la pédale, et **en ce qu'**il entoure, au moins partiellement, la tige de pression (18) de la pédale de telle sorte que, lors d'une force de traction dépassant une force limite prédéterminée, il prenne appui sur la tige de pression (18) de la pédale.

9. Dispositif à pédale selon la revendication 8, **caractérisé en ce que** le dispositif de traction (21) comporte un évidement (27), qui entoure la tige de pression (18) de la pédale, de préférence sans contact.

10. Dispositif à pédale selon la revendication 8 ou 9, **caractérisé en ce que** le dispositif de traction est relié à un élément de retenue (23) pouvant être recourbé, de préférence une tôle emboutie en profondeur, qui est fixé sur le tablier avant (16).

11. Dispositif à pédale selon l'une quelconque des revendications 1 à 10, **caractérisé en ce que** la pédale (17) est une pédale de frein, et **en ce que** la tige de pression de pédale est une tige de pression (18) de pédale de frein.

12. Dispositif à pédale selon l'une quelconque des revendications 1 à 11, **caractérisé en ce que** le dispositif de traction, de préférence le tirant intérieur (7) selon la revendication 4, est en outre fixé sur la pédale (17) de telle sorte que, lors du mouvement de recul du moteur ou de la boîte de vitesses par rapport à la carrosserie du véhicule ou à un cadre auxiliaire, le dispositif de traction puisse tirer la pédale en l'écartant du pied du conducteur.
